# EUROPÄISCHE PATENTANMELDUNG

(11) **EP 0 592 826 A2**
(43) Veröffentlichungstag der Anmeldung: **20.04.1994**
(21) Anmeldenummer: 93114783.9
(22) Anmeldetag: 15.09.1993
(51) Int. Cl.: B60Q 1/28, B60Q 1/32, F21Q 1/00

(54) **Blinkleuchte**

(30) Priorität: 14.10.1992 DE 4234645
(71) Anmelder: MAN Nutzfahrzeuge Aktiengesellschaft, 80976 München (DE)
(72) Erfinder: Fink, Johannes, Dipl.-Ing., D-85241 Hebertshausen (DE); Eisermann, Günter, D-85757 Karlsfeld (DE)

(57) **Zusammenfassung**

Es wird eine Blinkleuchte (12, 13) vorgeschlagen, deren Streuscheibe (14) eine Erhebung (16) aufweist, die sich im seitlichen Bereich des Fahrzeugs (10) erstreckt und eine Ausleuchtung im seitlichen Fahrzeugbereich bis relativ nah an das Fahrzeug ermöglicht.

## Beschreibung

Die Erfindung bezieht sich auf eine Blinkleuchte mit einer Glühbirnenfassung und einer in die Fahrzeugseite gezogenen Streuscheibe.

Blinkleuchten sind in der Regel in der Stoßstange oder in Karosserieteilen eines Fahrzeugs flächenbündig integriert. Um von einer Seite des Fahrzeugs eine Wendeabsicht des Fahrers erkennen zu können, ist öfters zu beiden Seiten des Fahrzeugs je eine weitere Blinkleuchte angeordnet. Dies bedarfjedoch einer Verdoppelung zumindest der im Bug angeordneten Blinkleuchten.

Eine seitliche Ausleuchtung wird auch mit Blinkleuchten erzielt, deren Streuscheiben gewölbt sind, derart, daß sie einen Eckbereich der Stoßstange oder der Karosserie einnehmen können. Die Streuscheibe ist dabei bis in den seitlichen Bereich gezogen. Mit dieser Lösung bleiben zusätzliche Blinkleuchten erspart. Mit diesen üblich verwendeten Blinkleuchten wird ein Bereich ausgeleuchtet, der jedoch nicht bis in seitlich mittlere Bereiche von insbesonderen langen Fahrzeugen, wie z.B. Nutzfahrzeugen, hinreicht. D.h., ein seitlich neben dem Fahrzeug fahrender Fahrradfahrer wird den Blinkvorgang nicht registrieren, wenn er sich auf halber Höhe des Fahrzeugs befindet.

Der Erfindung liegt die Aufgabe zugrunde, eine Blinkleuchte zu entwickeln, die weitmöglichst allseitig sichtbar ist.

Die Aufgabe wird erfindungsgemäß mit den Merkmalen des Anspruches 1 gelöst.

Die flächenbündige Streuscheibe weist dabei einen Bereich auf, der von dieser Fläche hervorragt, wobei die Glühbirne in diese Erhebung hineinragt. Es wird damit ein erweiterter Lichtkegel erzeugt, der eine höhere Strahlungsintensität in den seitlichen Bereich des Fahrzeugs ermöglicht.

Die erfindungsgemäße Streuscheibe ist vorzugsweise für den Bugbereich vorgesehen, womit der nach hinten gerichtete Sichtwinkel weit herabgesetzt werden kann.

Gemäß einer Ausgestaltung der Erfindung befindet sich die Erhebung im mittleren Bereich der Streuscheibe, so daß ein sanfter Obergang von der Fahrzeugoberfläche bis zur Erhebung geschaffen werden kann. Dabei wird die Erhebung vorzugsweise vom vorderen Streuscheibenbereich, von Null angefangen, langsam stetig bis zu einer maximalen Höhe im Seitenbereich der Streuscheibe angehoben. Damit können starke Kanten und dergleichen vermieden werden.

In der Zeichnung ist ein Ausführungsbeispiel der Erfindung in verschiedenen Ansichten schematisch dargestellt.

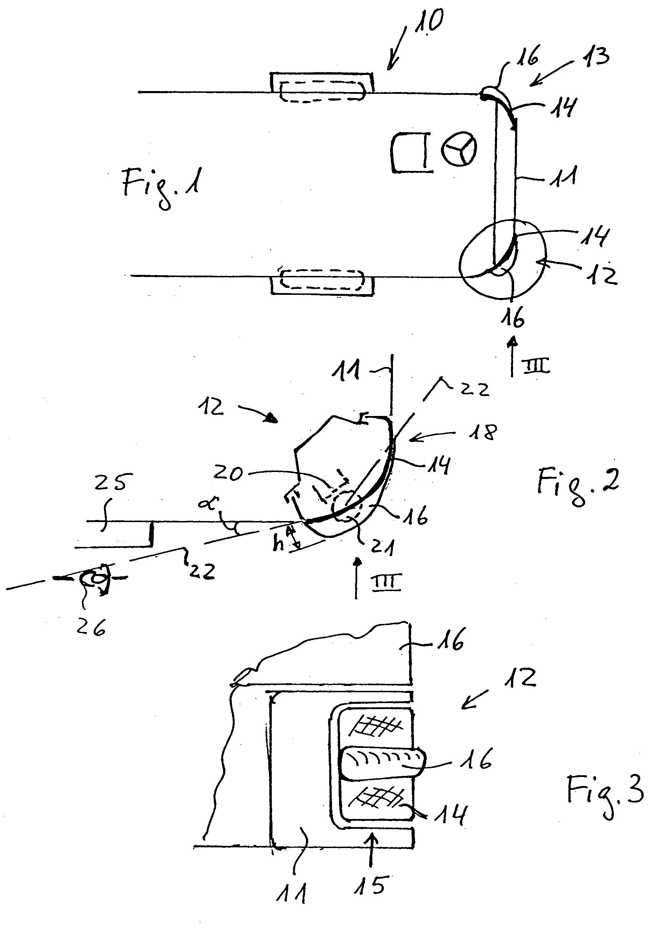

Figur 1 zeigt eine Draufsicht des vorderen Teils eines Lastwagens 10 mit einer vorderen Stoßstange 11 und darin in den Eckbereichen integrierte Blinkleuchten 12 und 13.

In gleicher Draufsicht ist das eingekreiste Detail in Figur 2 größer dargestellt. Die Blinkleuchte 12 weist eine Streuscheibe 14 auf, die im wesentlichen mit der Stoßstange 11 flächenbündig ist.

Figur 3 zeigt eine Seitenansicht gemäß Pfeil III, worin die rechte Seite der Stoßstange 11 und der zur Fahrzeugseite gezogene Bereich 15 der Streuscheibe 14 und ein Karosserieteil 16 oberhalb der Stoßstange 11 zu sehen sind. In senkrechter Richtung gesehen hat die Streuscheibe 14 im Mittelbereich eine Erhebung 16, deren maximale Höhe h sich in dem Seitenbereich der Blinkleuchte 13 befindet. Die Höhe der Erhebung 16 nimmt stetig in Richtung des Vorderbereiches 18 ab, derart, daß der vordere Bereich 18 keine Erhebung aufweist.

Die Glühbirnenfassung 20 ist so angeordnet, daß die Glühbirne in den Innenraum der Anhebung 16 hineinragt. Der Beleuchtungskonus 22 wird dadurch so erweitert, daß er sich seitlich bis auf einen geringen Winkel α an das Fahrzeug annähert. Ein seitlich hinter dem Radkasten 25 fahrender Radfahrer 26 wird auf diese Weise einen betätigten Blinker wahrnehmen und zu seiner Sicherung entsprechend reagieren.

## Patentansprüche

1. Blinkleuchte mit einer Glühbirnenfassung und einer in die Fahrzeugseite gezogene Streuscheibe, dadurch gekennzteichnet, daß die Streuscheibe (14) eine nach außen gerichtete Erhebung (16) aufweist und daß die Glühbirnenfassung (20) so angeordnet ist, daß die Glühbirne (21) in den Innenraum der Anhebung hineinragt.

2. Blinkleuchte nach Anspruch 1, gekennzeichnet durch die Anwendung der Blinkleuchte für den Bug eines Fahrzeugs.

3. Blinkleuchte nach Anspruch 2, dadurch gekennzeichnet, daß die Erhebung (16) im Seitenbereich (15) der Streuscheibe (14) am höchsten ist und daß die Höhe (h) der Anhebung stetig in Richtung zum vorderen Bereich (18) der Streuscheibe abnimmt.

4. Blinkleuchte nach einem der vorhergehenden Ansprüche, dadurch gekennzeichnet, daß die Erhebung (16) in vertikaler Richtung gesehen den Mittelbereich der Streuscheibe (14) annimmt.
